# EUROPÄISCHE PATENTSCHRIFT

(11) **EP 2 673 830 B1**
(45) Veröffentlichungstag und Bekanntmachung des Hinweises auf die Patenterteilung: **16.12.2015**
(21) Anmeldenummer: 12701442.1
(22) Anmeldetag: 17.01.2012
(51) Int. Cl.: H01M 10/613, H01M 10/643, H01M 10/654, H01M 10/6556, H01M 10/656, H01G 9/00

(54) **ENERGIESPEICHER**
ENERGY STORAGE MEANS
ACCUMULATEUR D'ÉNERGIE

(30) Priorität: 08.02.2011 DE 102011010664
(43) Veröffentlichungstag der Anmeldung: 18.12.2013
(73) Patentinhaber: Sew-Eurodrive GmbH & Co. KG, 76646 Bruchsal (DE)
(72) Erfinder: SCHMIDT, Josef, 76676 Graben-Neudorf (DE); SCHIFFMANN, Sebastian, 76709 Kronau (DE); HAUCK, Matthias, 68723 Schwetzingen (DE); LAMPERT, Christian, 76646 Bruchsal (DE)
(86) Internationale Anmeldenummer: PCT/EP2012/000181
(87) Internationale Veröffentlichungsnummer: WO 2012/107161

(56) Entgegenhaltungen:
- EP-A1- 0 887 876
- DE-A1- 3 416 745
- DE-A1- 10 358 582
- DE-A1-102008 034 855
- DE-A1-102008 042 587
- DE-A1-102009 034 675

## Beschreibung

Die Erfindung betrifft einen Energiespeicher.

Es ist bekannt, Energiespeicher mit positiven und negativen Elektrodenbereichen auszustatten, zwischen denen ein Separatorbereich angeordnet ist.

**Aus der** EP 0 887 876 A1 **eine zylinderförmige Sekundärbatterie bekannt.**

**Aus der** DE 10 2008 042587 A1 **ist ein Netz-unabhängiges Kühlsystem und eine zugehörige Energiespeichereinheit bekannt.**

**Aus der** DE 103 58 582 A1 **ist eine Batterie mit Mitteln zum Wärmetransport.**

**Aus der** DE 10 2008 034 855 A1 **ist ein Zellverbund für eine Batterie bekannt.**

**Aus der** DE 34 16 745 A1 **ist eine Kühlvorrichtung für elektrische Akkumulatoren bekannt.**

**Aus der** DE 10 2009 034 675 A1 **ist ein elektrochemischer Energiespeicher und ein Verfahren zum Kühlen eines elektrochemischen Energiespeichers bekannt.**

Der Erfindung liegt daher die Aufgabe zugrunde, einen Energiespeicher weiterzubilden mit möglichst hoher Leistungsdichte.

Erfindungsgemäß wird die Aufgabe bei dem Energiespeicher nach den in Anspruch 1 angegebenen Merkmalen gelöst.

Wichtige Merkmale der Erfindung bei dem Energiespeicher sind, dass der Energiespeicher zumindest eine Ausnehmung, insbesondere durchgehende Ausnehmung, angeordnet ist, die als Durchströmungskanal zur Kühlung des Energiespeichers fungiert.

Von Vorteil ist dabei, dass eine verbesserte passive Kühlung erreichbar ist, insbesondere bei nicht horizontaler Ausrichtung des Durchströmungskanals. Denn die konvektiv angetriebene Strömung, beispielsweise Luftströmung, durchströmt den Kanal und strömt auch an den Außenwänden entlang. Somit ist eine verbesserte Entwärmung erreichbar.

Bei Ausführung mehrerer Kanäle ist eine weitere Vergrößerung der Oberfläche und somit weiter verbesserte Entwärmung ermöglicht.

Statt der konvektiv angetriebenen Strömung sind auch aktiv angetriebene Kühlmittelströme verwendbar.

Bei einer vorteilhaften Ausgestaltung sind die Endbereiche des Durchströmkanals als Anschlussventile zum Anbinden der Energiespeicherzelle an einen Kühlmittelkreislauf ausgeprägt. Wird der Energiespeicher in einer bewegten Anlage eingesetzt, kann eine aktive Kühlung auch durch Ausrichtung des Durchströmkanals in Bewegungsrichtung erreicht werden.

Bei einer vorteilhaften Ausgestaltung ist der mindestens eine Durchströmungskanal mittig und/oder zentral angeordnet. Von Vorteil ist dabei, dass eine besonders gleichmäßige Entwärmung erreichbar ist.

Zur Herstellung des Energiespeichers ist der jeweilige Lagenaufbau der Energiespeicherzelle um einen Hohlzylinder wickelbar. Vorteilhafterweise weist der Hohlzylinder hierzu mechanische Aussparungen zur Zentrierung und Befestigung in einer Drehvorrichtung auf.

Bei einer vorteilhaften Ausgestaltung ist der Durchströmungskanal mittels eines Rohrteils begrenzt, insbesondere wobei das Rohrteil als metallisches Hohlteil oder Kunststoff-Hohlteil ausgeführt ist, insbesondere wobei das Rohrteil durchgehend durch den Energiespeicher ausgeführt ist. Von Vorteil ist dabei, dass eine hohe Dichtheit in sicherer Weise erreichbar ist, indem das Rohrteil einstückig ausgeführt ist und somit das Kühlmedium nicht in den Innenbereich des Energiespeichers dringen kann.

Bei einer vorteilhaften Ausgestaltung weist der Energiespeicher ein Gehäuseteil, insbesondere ein topfförmiges Gehäuseteil, auf, durch welches das Rohrteil geführt ist, insbesondere wobei das Rohrteil durch den Topfboden des Gehäuseteils geführt ist. Das topfförmige Gehäuseteil ist nach dem Aufwickeln des Lagenaufbaus auf das Rohr, also Hohlteil, auf die Energiespeicherzelle pressbar. Von Vorteil ist dabei, dass ein einfacher kostengünstiger Aufbau ermöglicht ist.

Bei einer vorteilhaften Ausgestaltung sind im zwischen Gehäuseteil und Rohrteil gebildeten Innenbereich, insbesondere in radialer Richtung jeweils abwechselnd, Bereiche einer positiven Elektrode jeweils mittels eines Separators von Bereichen einer negativen Elektrode beabstandet sind. Der Lagenaufbau ist also spiralförmig gewickelt oder aus konzentrischen Ringlagen zusammengesetzt. Von Vorteil ist dabei, dass eine symmetrische Anordnung, beispielsweise eine rotationssymmetrische Anordnung um das hohlzylindrische Rohrteil herum, ausführbar ist und somit eine möglichst gleichmäßige Entwärmung ermöglicht ist.

Bei einer vorteilhaften Ausgestaltung umfasst der Separator einen Elektrolyt und/oder einen elektrischen Isolator. Von Vorteil ist dabei, dass der Energiespeicher als Kondensator oder als Akkumulator oder als Batterie ausführbar ist.

Bei einer vorteilhaften Ausgestaltung wird folgende Aufbaureihenfolge gewählt: Zuerst wird Der Gehäusedeckel auf ein Rohrteil gesteckt, so dass innere Mantelfläche und Grundfläche umschlossen sind, danach wird das Rohrteil in Wickelvorrichtung eingespannt, danach werden die Lagen um Topfboden gewickelt, danach wird das Gehäuseteil aufgepresst und/oder gebördelt, so dass es die äußere Mantelfläche und andere Grundfläche umschließt, danach wird die Isolierfolie aufgezogen.

Bei einer vorteilhaften Ausgestaltung ist am dem Topfboden gegenüber liegenden axialen Endbereich des Energiespeichers ein Gehäusedeckel zum Verschließen des Innenbereichs angeordnet. Von Vorteil ist dabei, dass eine einfache Montage, insbesondere beim Einführen der Elektroden-Bereiche und des Separator- Bereichs in den Innenbereich, aus nur einer einzigen Richtung ermöglicht ist.

Bei der erfindungsgemäßen Ausgestaltung sind zwischen Gehäusedeckel und Gehäuseteil ein oder mehrere elektrische Isoliermittel angeordnet. Von Vorteil ist dabei, dass Gehäusedeckel und Gehäuseteil Anschlusspole des Energiespeichers bilden können.

Bei der erfindungsgemäßen Ausgestaltung sind das Gehäuseteil und der Gehäusedeckel metallisch ausgeführt,
wobei das Gehäuseteil mit einer der Elektroden elektrisch verbunden ist und der Gehäusedeckel mit der anderen Elektrode. Von Vorteil ist dabei, dass eine Kontaktierung in einfacher Weise; insbesondere ohne zusätzliche Mittel, ausführbar ist.

Bei der erfindungsgemäßen Ausgestaltung fungiert das Rohr als eines der elektrischen Isoliermittel zur elektrischen Isolierung zwischen Gehäuseteil und Gehäusedeckel, wobei das Rohr eine Verdickung aufweist, an deren axialen Endbereichen Gehäusedeckel beziehungsweise Gehäuseteil angeordnet sind, insbesondere angedrückt sind. Von Vorteil ist dabei, dass eine Beabstandung und elektrische Isolierung mit demselben Rohrteil ausführbar ist und das Rohrteil als Kunststoffspritzgussteil einfach und kostengünstig herstellbar ist.

Bei der erfindungsgemäßen Ausgestaltung weisen das Gehäuseteil und der Gehäusedeckel jeweils ein Gewinde zur elektrischen Kontaktierung auf, also ein Anschlussgewinde zum Anschließen der Pole. Von Vorteil ist dabei, dass eine besonders einfache Kontaktierung einsetzbar ist, welche auch für hohe Ströme verwendbar ist.

Bei einer vorteilhaften Ausgestaltung ist die Ausnehmung, insbesondere das Rohrteil, von einem Kühlmedium, insbesondere Gas und/oder Flüssigkeit, durchströmt. Von Vorteil ist dabei, dass eine Entwärmung der Innenbereiche des Energiespeichers ermöglicht ist.

Bei einer vorteilhaften Ausgestaltung ist der Energiespeicher eine Akkuzelle oder Batteriezelle eines Akkumulators beziehungswiese einer Batterie. Von Vorteil ist dabei, dass die Erfindung auf verschiedene Sorten von Energiespeichern anwendbar ist, beispielsweise elektrochemische Energiespeicher, wie Akkumulatoren und Batterieen, oder auch Doppelschichtkondensatoren.

Bei einer vorteilhaften Ausgestaltung weist das Gehäuse des Energiespeichers, insbesondere umfassend das Gehäuseteil und den Gehäusedeckel, eine im Wesentlichen zylindrische Außenoberfläche auf. Von Vorteil ist dabei, dass eine kompakte Anordnung und eine gleichmäßige Entwärmung erreichbar ist.

Bei einer vorteilhaften Ausgestaltung ist das Rohrteil umwickelt mit den die Elektrodenbereiche und den Separator bildenden Innenlagen. Von Vorteil ist dabei, dass eine besonders symmetrische Anordnung und somit auch gleichmäßige Entwärmung erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die zu einer genannten gleichmäßigen Entwärmung bei der Erfindung führenden Effekte sind auch zum Aufheizen umgekehrt einsetzbar. Hierzu ist kein Kühlmedium sondern ein Wärmeabstrahlendes Medium notwendig. **Daher sind die Begriffe Kühlmedium als Temperiermedium und Entwärmung oder Kühlung als Temperierung zu verstehen.**

Die Erfindung wird nun anhand von schematischen Abbildungen näher erläutert:

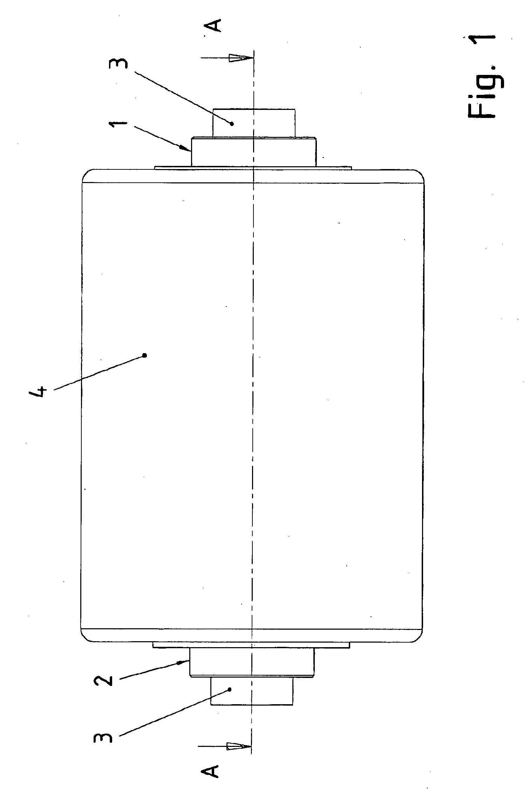

In der Figur 1 ist eine Seitenansicht des Energiespeichers gezeigt.

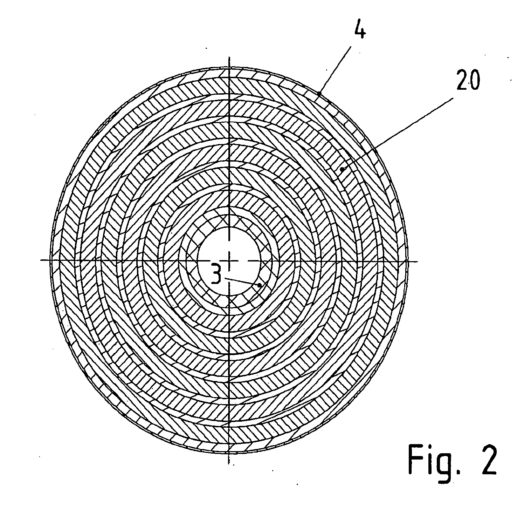

In der Figur 2 ist eine Draufsicht des Energiespeichers gezeigt.
In der Figur 3 ist ein Querschnitt durch den Energiespeicher gezeigt.

Der Energiespeicher weist einen Durchströmungskanal auf, so dass die Entwärmung mittels eines durch diesen Kanal strömenden Kühlmittels verbesserbar ist.

Der Energiespeicher weist eine topfförmiges Gehäuse 4 auf, an dessen Boden eine Ausnehmung angeordnet ist, durch welche ein Rohr 3 zur Bildung eines Durchströmungskanals 31 geführt ist.

Auf dem Rohr 3 sind innerhalb des Gehäuses 4 Bereiche der positiven Elektrode 32, des Separators 33 und der negativen Elektrode 34 abwechselnd vorgesehen, wobei der Separator 33 stets zwischen den Bereichen der positiven Elektrode 32 und der negativen Elektrode 34 angeordnet ist.

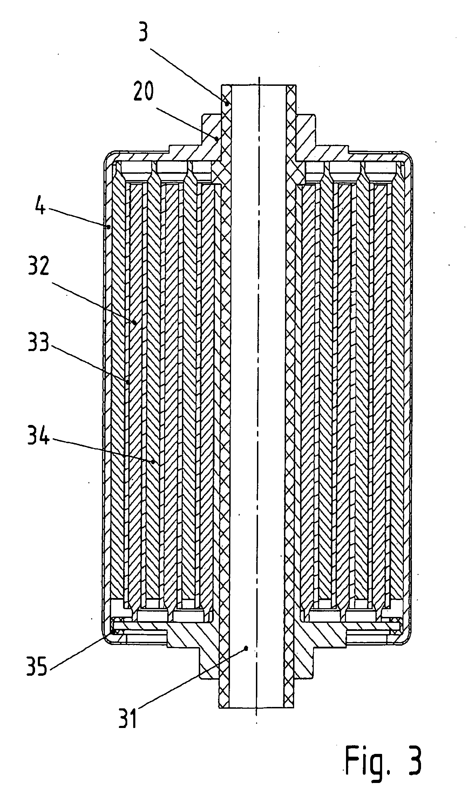

Dabei ist in Figur 3 deutlich gezeigt, dass von radial innen nach radial außen zunächst eine negative Elektrode 34 gefolgt wird von einer Separatorschicht 33, auf die wiederum eine positive Elektrode 32 folgt. Auf eine aufliegende weitere Schicht des Separators 33 folgt wiederum eine negative Elektrode 34, womit sich dann die beschriebene Abfolge fortsetzt. Am äußeren Umfang, also direkt radial innerhalb des Gehäuses 4 ist eine positive Elektrode 32 angeordnet.

Axial ist der Topf, also das topfförmige Gehäuse 4, verschlossen mit einem Gehäusedeckel 20, wobei zwischen dem Gehäusedeckel 20 und dem Gehäuse 4 ein elektrisches Isoliermittel 35 als Dichtung eingesetzt ist.

Mittels des zentralen, also mittig angeordneten Durchströmungskanal 31 ist eine besonders gute und effektive Entwärmung des Energiespeichers bewirkbar.

In einem weiteren erfindungsgemäßen Ausführungsbeispiel sind mehrere Durchströmungskanäle vorgesehen. Somit ist eine weiter verbesserte Entwärmung erreichbar.

In einem weiteren erfindungsgemäßen Ausführungsbeispiel der Energiespeicher nicht nur als Kondensator sondern auch als Akkumulator, wie beispielsweise Doppelschichtkondensator, Ultracap oder Batterie ausführbar. Dabei sind die Elektroden entweder aus gleichen metallischen Materialien oder aus unterschiedlichen metallischen Materialien ausgeführt. Der Separator ist je nach Art des Energiespeichers ein elektrischer Isolator oder ein Elektrolyt.

### Bezugszeichenliste

- 1: Anschlussgewinde Negativer Pol
- 2: Anschlussgewinde Positiver Pol
- 3: Rohr zur Bildung eines Durchströmungskanals
- 4: Gehäuse, topfförmig
- 20: Gehäusedeckel
- 31: Durchströmungskanal
- 32: positive Elektrode
- 33: Separator
- 34: Negative Elektrode
- 35: Isoliermittel

## Patentansprüche

1. Energiespeicher,
**wobei** in dem Energiespeicher zumindest eine **durchgehende Ausnehmung** angeordnet ist, die als Durchströmungskanal zur Kühlung des Energiespeichers fungiert,
**wobei zwischen Gehäusedeckel und Gehäuseteil ein oder mehrere elektrische Isoliermittel angeordnet sind,**
**wobei das Gehäuseteil und der Gehäusedeckel metallisch ausgeführt sind,**
**wobei das Gehäuseteil mit einer der Elektroden elektrisch verbunden ist und der Gehäusedeckel mit der anderen Elektrode,**
**wobei das Rohr als eines der elektrischen Isoliermittel zur elektrischen Isolierung zwischen Gehäuseteil und Gehäusedeckel fungiert, wobei das Rohr eine Verdickung aufweist, an deren axialen Endbereichen Gehäusedeckel beziehungsweise Gehäuseteil angedrückt sind,**
**wobei das Gehäuseteil und der Gehäusedeckel jeweils ein Gewinde zur elektrischen Kontaktierung aufweisen, also ein Anschlussgewinde zum Anschließen der Pole.**

2. Energiespeicher nach Anspruch 1,
**dadurch gekennzeichnet, dass**
der mindestens eine Durchströmungskanal mittig und/oder zentral angeordnet ist.

3. Energiespeicher nach mindestens einem der vorangegangenen Ansprüche,
**dadurch gekennzeichnet, dass**
der Durchströmungskanal mittels eines Rohrteils begrenzt ist.

4. Energiespeicher nach mindestens einem der vorangegangenen Ansprüche,
**dadurch gekennzeichnet, dass**
das Rohrteil als Montagehilfe für die Bewickelung mit einem mehrlagigen Schichtenaufbau vorgesehen ist.

5. Energiespeicher nach mindestens einem der vorangegangenen Ansprüche,
**dadurch gekennzeichnet, dass**
das Rohrteil als metallisches Hohlteil oder als Kunststoffhohlteil ausgeführt ist, insbesondere wobei das Rohrteil durchgehend durch den Energiespeicher ausgeführt ist.

6. Energiespeicher nach mindestens einem der vorangegangenen Ansprüche,
**dadurch gekennzeichnet, dass**
der Energiespeicher ein Gehäuseteil, insbesondere ein topfförmiges Gehäuseteil, aufweist, durch welches das Rohrteil geführt ist, insbesondere wobei das Rohrteil durch den Topfboden des Gehäuseteils geführt ist.

7. Energiespeicher nach mindestens einem der vorangegangenen Ansprüche,
**dadurch gekennzeichnet, dass**
im zwischen Gehäuseteil und Rohrteil gebildeten Innenbereich, insbesondere in radialer Richtung jeweils abwechselnd, Bereiche einer positiven Elektrode jeweils mittels eines Separators von Bereichen einer negativen Elektrode beabstandet sind.

8. Energiespeicher nach mindestens einem der vorangegangenen Ansprüche,
**dadurch gekennzeichnet, dass**
der Separator einen Elektrolyt und/oder einen elektrischen Isolator umfasst.

9. Energiespeicher nach mindestens einem der vorangegangenen Ansprüche,
**dadurch gekennzeichnet, dass**
am dem Topfboden gegenüber liegenden axialen Endbereich des Energiespeichers ein Gehäusedeckel zum Verschließen des Innenbereichs angeordnet ist.

10. Energiespeicher nach mindestens einem der vorangegangenen Ansprüche,
**dadurch gekennzeichnet, dass**
die Ausnehmung, insbesondere das Rohrteil, von einem Kühlmedium, insbesondere Gas und/oder Flüssigkeit, durchströmt ist.

11. Energiespeicher nach mindestens einem der vorangegangenen Ansprüche,
**dadurch gekennzeichnet, dass**
der Energiespeicher eine Akkuzelle oder Batteriezelle eines Akkumulators beziehungswiese einer Batterie ist.

12. Energiespeicher nach mindestens einem der vorangegangenen Ansprüche,
**dadurch gekennzeichnet, dass**
das Gehäuse des Energiespeichers, insbesondere umfassend das Gehäuseteil und den Gehäusedeckel, eine im Wesentlichen zylindrische Außenoberfläche aufweist.

13. Energiespeicher nach mindestens einem der vorangegangenen Ansprüche,
**dadurch gekennzeichnet, dass**
das Rohrteil umwickelt ist mit den die Elektrodenbereiche und den Separator bildenden Innenlagen.

## Claims

1. Energy store,
wherein at least one through-opening is arranged in the energy store, which through-opening functions as a through-flow channel for cooling the energy store,
wherein one or more electrical insulating means are arranged between housing cover and housing part,
wherein the housing part and the housing cover are of metallic construction,
wherein the housing part is electrically connected to one of the electrodes and the housing cover to the other electrode,
wherein the tube functions as one of the electrical insulating means for electrical insulation between housing part and housing cover, wherein the tube has a thickening, against the axial end regions of which are pressed housing cover or housing part,
wherein the housing part and the housing cover each have a thread for electrical contacting, that is to say a connecting thread for connection of the poles.

2. Energy store according to Claim 1,
**characterised in that**
the at least one through-flow channel is arranged centrically and/or centrally.

3. Energy store according to at least one of the preceding claims,
**characterised in that**
the through-flow channel is bounded by means of a tube part.

4. Energy store according to at least one of the preceding claims,
**characterised in that**
the tube part is provided as a mounting aid for wrapping with a multi-layered layer structure.

5. Energy store according to at least one of the preceding claims,
**characterised in that**
the tube part is constructed as a metallic hollow part or as a plastics hollow part, in particular wherein the tube part is constructed to pass right through the energy store.

6. Energy store according to at least one of the preceding claims,
**characterised in that**
the energy store has a housing part, in particular a cup-shaped housing part, through which the tube part is led, in particular wherein the tube part is led through the cup bottom of the housing part.

7. Energy store according to at least one of the preceding claims,
**characterised in that**
in the inner region formed between housing part and tube part, in particular each alternately in the radial direction, regions of a positive electrode are each spaced by means of a separator from regions of a negative electrode.

8. Energy store according to at least one of the preceding claims,
**characterised in that**
the separator comprises an electrolyte and/or or an electrical insulator.

9. Energy store according to at least one of the preceding claims,
**characterised in that**
a housing cover for closing the inner region is arranged at the axial end region of the energy store lying opposite the cup bottom.

10. Energy store according to at least one of the preceding claims,
**characterised in that**
a cooling medium, in particular gas and/or liquid, flows through the opening, in particular the tube part.

11. Energy store according to at least one of the preceding claims,
**characterised in that**
the energy store is an accumulator cell or battery cell of an accumulator or of a battery.

12. Energy store according to at least one of the preceding claims,
**characterised in that**
the housing of the energy store, in particular comprising the housing part and the housing cover, has a substantially cylindrical outer surface.

13. Energy store according to at least one of the preceding claims,
**characterised in that**
the tube part is wrapped with the inner layers forming the electrode regions and the separator.

## Revendications

1. Accumulateur d'énergie,
dans lequel accumulateur d'énergie est disposé au moins un évidement traversant qui agit comme canal d'écoulement pour le refroidissement de l'accumulateur d'énergie,
dans lequel un ou plusieurs moyens d'isolation électrique sont disposés entre un couvercle de boîtier et une partie de boîtier,
dans lequel la partie de boîtier et le couvercle de boîtier sont réalisés en métal,
dans lequel la partie de boîtier est reliée électriquement à une des électrodes et le couvercle de boîtier à l'autre électrode,
dans lequel le tube agit comme l'un des moyens d'isolation électrique pour l'isolation électrique entre la partie de boîtier et le couvercle de boîtier, le tube présentant un épaississement sur les zones d'extrémité axiales duquel le couvercle de boîtier et la partie de boîtier sont respectivement pressés,
dans lequel la partie de boîtier et le couvercle de boîtier présentent chacun un filetage pour l'établissement du contact électrique, donc un filetage de raccordement pour le raccordement des pôles.

2. Accumulateur d'énergie selon la revendication 1,
**caractérisé en ce que**
ledit au moins un canal d'écoulement est disposé au milieu et/ou au centre.

3. Accumulateur d'énergie selon au moins l'une des revendications précédentes,
**caractérisé en ce que**
le canal d'écoulement est limité au moyen d'une partie tubulaire.

4. Accumulateur d'énergie selon au moins l'une des revendications précédentes,
**caractérisé en ce que**
la partie tubulaire est prévue comme aide au montage pour le bobinage avec une structure stratifiée à plusieurs couches.

5. Accumulateur d'énergie selon au moins l'une des revendications précédentes,
**caractérisé en ce que**
la partie tubulaire est réalisé sous la forme d'une pièce creuse métallique ou d'une pièce creuse en matière plastique, la partie tubulaire étant en particulier réalisée continue à travers l'accumulateur d'énergie.

6. Accumulateur d'énergie selon au moins l'une des revendications précédentes,
**caractérisé en ce que**
l'accumulateur d'énergie présente une partie de boîtier, en particulier une partie de boîtier en forme de pot, à travers laquelle la partie tubulaire est passée, la partie tubulaire étant en particulier passée à travers le fond de pot de la partie de boîtier.

7. Accumulateur d'énergie selon au moins l'une des revendications précédentes,
**caractérisé en ce que**
dans la zone intérieure formée entre la partie de boîtier et la partie tubulaire, en particulier en alternance en direction radiale, des zones d'une électrode positive sont espacées de zones d'une électrode négative chaque fois au moyen d'un séparateur.

8. Accumulateur d'énergie selon au moins l'une des revendications précédentes,
**caractérisé en ce que**
le séparateur comprend un électrolyte et/ou un isolateur électrique.

9. Accumulateur d'énergie selon au moins l'une des revendications précédentes,
**caractérisé en ce que**
un couvercle de boîtier servant à fermer la zone intérieure est disposé sur la zone d'extrémité axiale de l'accumulateur d'énergie opposée au fond de pot.

10. Accumulateur d'énergie selon au moins l'une des revendications précédentes,
**caractérisé en ce que**
l'évidement, en particulier la partie tubulaire, est traversé(e) par un milieu de refroidissement, en particulier un gaz et/ou un liquide.

11. Accumulateur d'énergie selon au moins l'une des revendications précédentes,
**caractérisé en ce que**
l'accumulateur d'énergie est un élément d'accumulateur ou un élément de batterie d'un accumulateur, respectivement d'une batterie.

12. Accumulateur d'énergie selon au moins l'une des revendications précédentes,
**caractérisé en ce que**
le boîtier de l'accumulateur d'énergie, comprenant en particulier la partie de boîtier et le couvercle de boîtier, présente une surface extérieure sensiblement cylindrique.

13. Accumulateur d'énergie selon au moins l'une des revendications précédentes,
**caractérisé en ce que**
la partie tubulaire est enveloppée par les couches intérieures formant les zones d'électrode et le séparateur.
